# EUROPÄISCHE PATENTSCHRIFT

(11) **EP 2 799 812 B1**
(45) Veröffentlichungstag und Bekanntmachung des Hinweises auf die Patenterteilung: **18.05.2016**
(21) Anmeldenummer: 14160655.8
(22) Anmeldetag: 19.03.2014
(51) Int. Cl.: G01C 15/00, G01C 15/02

(54) **Vermessungsprisma**
Measuring prism
Prisme de mesure

(30) Priorität: 03.05.2013 DE 202013101924 U
(43) Veröffentlichungstag der Anmeldung: 05.11.2014
(73) Patentinhaber: Rothbucher, Georg, 83457 Bayerisch Gmain (DE)
(72) Erfinder: Rothbucher, Georg, 83457 Bayerisch Gmain (DE)
(74) Vertreter: Schaumburg und Partner Patentanwälte mbB

(56) Entgegenhaltungen:
- WO-A1-2005/012834
- DE-A1- 4 025 119
- US-A- 4 519 674
- US-A- 4 898 452
- US-A- 5 311 222

## Beschreibung

Die Erfindung betrifft ein Vermessungsprisma mit einem ein Prismaelement aufnehmenden Prismagehäuse und einer Halterung, in der das Prismagehäuse um eine parallel zur Lichteintrittsfläche des Prismaelementes gerichtete Schwenkachse schwenkbar gelagert ist, wobei die Halterung als Basis mit einer eine Auflagefläche für das Vermessungsprisma bildenden Grundplatte und zwei senkrecht zu dieser gerichteten Lagerflanschen ausgebildet ist, zwischen denen das Prismagehäuse schwenkbar gelagert ist. Ein Vermessungsprisma dieser Art ist beispielsweise aus der US 5,311,222 A oder der US 4,519,674 A bekannt.

Bei bekannten Vermessungsprismen dieser Art umfasst die Halterung in der Regel eine Gabel, zwischen deren Schenkeln das Prismagehäuse schwenkbar gelagert ist und mit Hilfe von Schrauben in einer bestimmten Schwenkstellung festgestellt werden kann. Die Gabel ihrerseits umfasst einen stabförmigen Schaft, der entweder eine Spitze hat, mit der er auf eine Unterlage aufgesetzt werden kann, oder der in einen Adapter einsetzbar ist, der seinerseits wiederum auf einer Unterlage befestigt werden muss. Die gesamte Konstruktion ist aufwendig und teuer und umständlich zu handhaben.

Der Erfindung liegt die Aufgabe zugrunde, ein Vermessungsprisma der eingangs genannten Art anzugeben, das einfach und preisgünstig in der Herstellung und Wartung sowie einfach zu handhaben ist und das eine Vielzahl von Verwendungsmöglichkeiten bietet.

Erfindungsgemäß wird diese Aufgabe dadurch gelöst, dass die Grundplatte an mindestens einem ihrer Ränder Kopplungsmittel zur lösbaren Verbindung mit der Grundplatte eines gleichartig ausgebildeten Vermessungsprismas (10) hat.

Die Basis mit der Grundplatte bietet die Möglichkeit, das Vermessungsprisma auf einer Objektfläche, die vermessen werden soll, abzustellen, auf der Fläche auszurichten und ggf. an der Fläche zu befestigen. Dies kann entweder mit Hilfe von die Grundplatte durchsetzenden Schrauben oder auch einfach durch Kleben erfolgen. Diese Ausbildung erleichtert die Handhabung des Vermessungsprismas beim Vermessungsvorgang erheblich. Ferner können mit Hilfe der Kupplungselemente zwei nebeneinander angeordnete Vermessungsprismen exakt aufeinander ausgerichtet werden. Dies ermöglicht es, eine Anordnung aus mehreren Vermessungsprismen zusammenzustellen, die aus verschiedenen Richtungen angepeilt werden können und wobei gleichzeitig ein gemeinsamer Bezugspunkt genau festgelegt werden kann.

Vorzugsweise sind die Lagerflansche Teil eines Lagerrahmens, der mit der Grundplatte lösbar verbindbar ist. Vorzugsweise ist dabei der Lagerrahmen gegenüber der Grundplatte um eine zu dieser senkrechte Achse verstellbar. Beispielsweise kann der Lagerrahmen mit der Grundplatte in mindestens zwei verschiedenen Stellungen verbindbar sein, die um eine zur Grundplatte senkrechte Achse gegeneinander versetzt sind. Diese Ausführungsform erleichtert nicht nur die Montage des Vermessungsprismas, sondern bietet auch die Möglichkeit, bei bereits befestigter Grundplatte die Orientierung des Vermessungsprismas zu verändern. Vorzugsweise sind dabei die beiden Stellungen um 90° gegeneinander versetzt. Die lösbare Verbindung der Grundplatte mit dem Lagerrahmen kann durch lösbare Rastmittel erfolgen.

Bei einer bevorzugten Ausführungsform sind an den axialen Enden des Prismagehäuses Lagerringe ausgebildet, wobei an den einander zugekehrten Flächen der Lagerflansche zur Bodenplatte hin offene Lagerschalen zur Aufnahme der Lagerringe ausgebildet sind und wobei Spannmittel zum Halten der Lagerringe in den Lagerschalen vorgesehen sind. Diese Ausführungsform ist einfach herzustellen und ermöglicht eine rasche und bequeme Montage des Prismagehäuses in dem Lagerrahmen. Die Spannmittel können beispielsweise eine lösbar mit dem Lagerrahmen verbindbare Abdeckplatte umfassen, die in ihrer Verbindungsstelle an dem Prismagehäuse anliegt und somit dieses in den Lagerschalen hält. Gleichzeitig deckt die Abdeckplatte die Öffnung, durch welche das Prismagehäuse in den Lagerrahmen eingeführt wurde ab. Zweckmäßigerweise sind an der Abdeckplatte zur Anlage an den Lagerringen bestimmte Teillagerschalen ausgebildet, so dass ein zumindest annähernd geschlossenes Lager für die Lagerringe gebildet wird.

Um das Prismagehäuse mit dem Prismaelement in einer bestimmten Schwenkstellung sicher halten zu können, ist es zweckmäßig, wenn an der Abdeckplatte einerseits und dem Prismagehäuse andererseits Federrastmittel ausgebildet sind, die eine Vielzahl von Raststellen definieren, in denen das Prismagehäuse relativ zur Basis feststellbar ist. Zweckmäßigerweise ist dabei der Schwenkwinkel des Prismagehäuses durch Endanschläge begrenzt, wobei der Gesamtschwenkwinkel des Prismagehäuses mindestens 180° beträgt.

Die Federrastmittel können beispielsweise als Kugelrasten ausgebildet sein, deren Kugeln durch separate Federn in entsprechende Vertiefungen vorgespannt werden. Eine besonders preiswerte Lösung sieht jedoch vor, dass die Federrastmittel eine an der Abdeckplatte oder dem Prismagehäuse ausgebildete federnde Rastzunge mit einer Rastnase und eine Vielzahl von zur Aufnahme der Rastnase bestimmten Rastvertiefungen erfassen, die an dem Prismagehäuse bzw. der Abdeckplatte entlang dem Schwenkweg des Prismagehäuses angebracht sind. Eine solche Rastzunge lässt sich in einem Arbeitsgang mit dem sie tragenden Teil herstellen. Eine eigene Montage der Rastmittel entfällt.

Zweckmäßigerweise hat das Prismagehäuse zwischen den Lagerringen die Form eines Zylinders, der parallel zu der mit der Schwenkachse zusammenfallenden Zylinderachse angeschnitten ist, wobei die Schnittfläche eine Aufnahmeöffnung für das Prismaelement enthält.

Sämtliche Teile des Prismagehäuses und der Basis können aus Kunststoff hergestellt und aufgrund der Rastverbindungen ohne die Hilfe von Werkzeugen montiert werden. Dadurch erhält man ein einfach herzustellendes und preiswertes Vermessungsprisma, das zudem einfach zu handhaben ist.

Weitere Merkmale und Vorteile der Erfindung ergeben sich aus den weiteren Unteransprüchen und der folgenden Beschreibung, welche in Verbindung mit den beigefügten Zeichnungen die Erfindung anhand eines Ausführungsbeispieles erläutert. Es zeigen:
- Fig.1: eine teilweise schematische perspektivische Gesamtansicht des erfindungsgemäßen Prismas,
- Fig.2: eine perspektivische Ansicht des Lagerrahmens allein,
- Fig.3: eine perspektivische Ansicht des Prismagehäuses allein,
- Fig.4: eine perspektivische Ansicht der Grundplatte allein,
- Fig.5: eine perspektivische Ansicht der das Prismagehäuse in dem Lagerrahmen haltenden Abdeckplatte allein,
- Fig.6: eine Draufsicht auf das in Fig.1 dargestellte Vermessungspris ma,
- Fig.7: einen Schnitt durch das Vermessungsprisma entlang Fig.VII-VII in Fig.6,
- Fig.8: eine vergrößerte Darstellung des Ausschnittes X in Fig.7,
- Fig.9: einen Schnitt durch das Vermessungsprisma entlang Linie IX-IX in Fig.6,
- Fig.10: eine vergrößerte Darstellung des Ausschnittes Y in Fig.9,
- Fig.11 und 12: Teile der Grundplatten zweier nebeneinander angeordneter Vermessungsprismen und
- Fig.13: eine teilweise schematische Darstellung zweier entlang einer Kante eines Objektes angeordneter erfindungsgemäßer Vermessungsprismen.

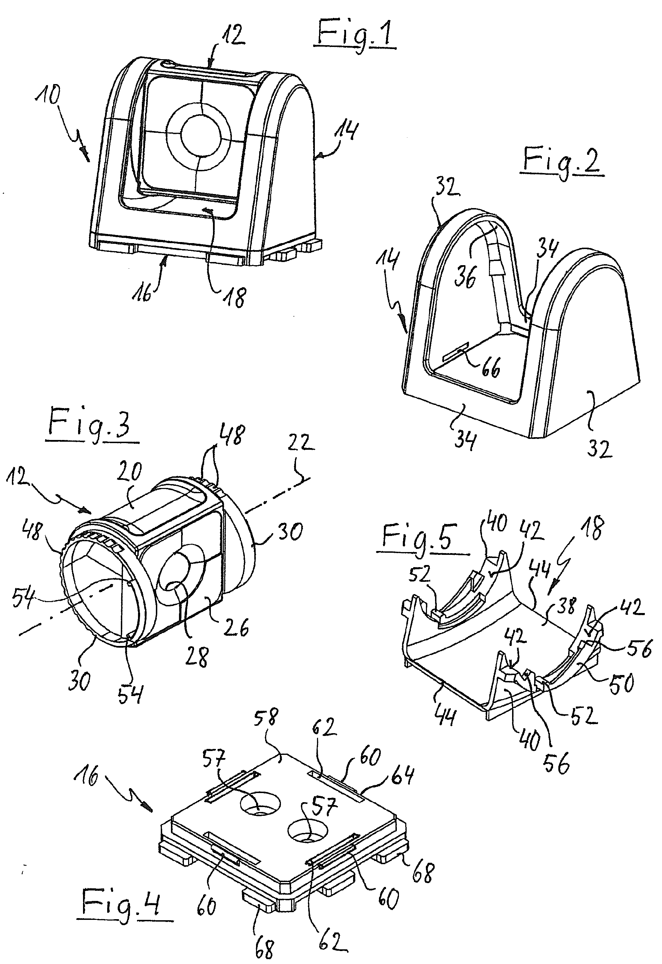

Fig.1 zeigt ein allgemein mit 10 bezeichnetes erfindungsgemäßes Vermessungsprisma, dessen wesentliche Einzelteile in den Fig.2 bis 5 dargestellt sind. Das Vermessungsprisma 10 umfasst somit ein allgemein mit 12 bezeichnetes Prismagehäuse, das in einem Lagerrahmen 14 schwenkbar gelagert ist, der seinerseits mit einer Grundplatte 16 verbindbar ist und zusammen mit dieser eine Basis für das Prismagehäuse 12 bildet. In dem Lagerrahmen 14 wird das Prismagehäuse 12 mit Hilfe einer Abdeckplatte 18 gehalten. Die vorstehend genannten Einzelteile sollen nun näher erläutert werden.

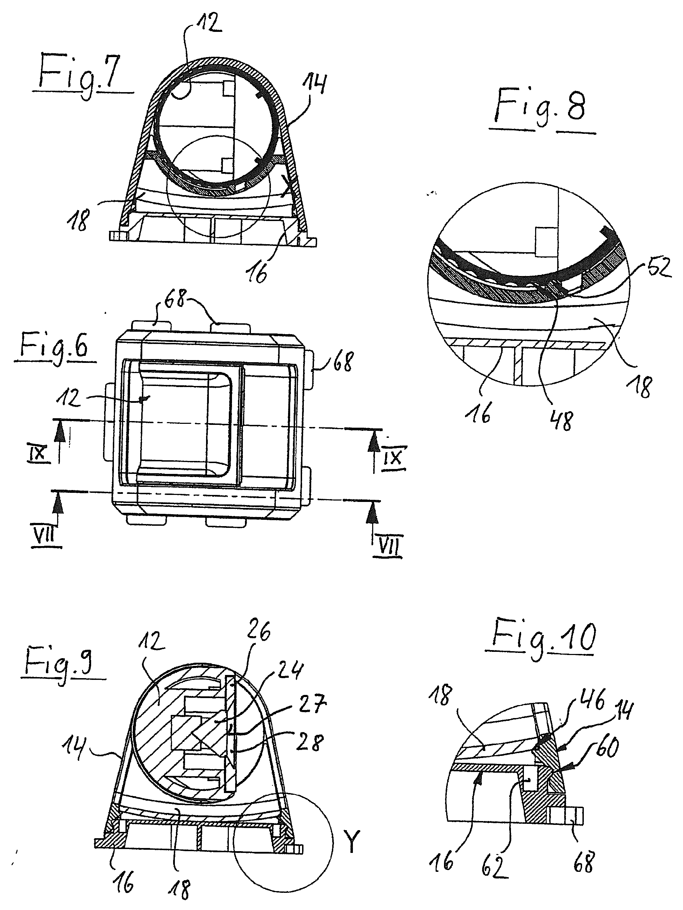

Das Prismagehäuse 12 hat die Form einer Trommel mit einer teilzylindrischen Umfangsfläche 20, deren Zylinderachse oder Krümmungsachse mit der Schwenkachse 22 des Prismagehäuses 12 zusammenfällt. Der so gebildete Zylinder ist parallel zu seiner Achse angeschnitten. Die Schnittfläche enthält eine Öffnung, in welche ein Prismaelement 24 (Fig.9) eingesetzt ist, das in seiner Stellung in dem Prismagehäuse 12 durch eine Halterahmen 26 gesichert wird, der eine die Lichteintrittsfläche 27 des Prismaelementes 24 freigebende Öffnung 28 hat.

An seinen axialen Enden hat das Prismagehäuse 12 jeweils einen Lagerring 30. Mit Hilfe dieser Lagerringe 30 ist das Prismagehäuse 12 in dem Lagerrahmen 14 schwenkbar gelagert, der von zwei zueinander parallelen Lagerflanschen 32 gebildet wird, die durch Stege 34 miteinander verbunden sind. An den einander zugekehrten Innenflächen der Lagerflansche 32 sind jeweils nach unten offene Lagerschalen 36 ausgebildet, an denen die Lagerringe 30 anliegen, wie dies in den Fig.7 und 9 zu erkennen ist. Das Prismagehäuse 12 wird in dieser Lagerstellung durch die in der Fig.5 dargestellte Abdeckplatte 18 gehalten. Die Abdeckplatte besteht aus einem den Lagerrahmen 14 nach unten hin verschließenden Mittelabschnitt 38 sowie zwei Randflanschen 40. Diese Randflansche 40 haben an ihrem oberen Rand Teillagerflächen 42, die zur Anlage an den Lagerringen 30 des Prismagehäuses 12 bestimmt sind und dieses von unten her abstützen.

Nachdem das Prismagehäuse 12 von unten her in den nach unten offenen Lagerrahmen 14 eingesetzt wurde, bis die Lagerringe 30 in den Lagerschalen 36 der Lagerflansche 32 liegen, wird die Abdeckplatte 18 ebenfalls von unten her in den Lagerrahmen 14 eingedrückt, bis sie mit den Rändern 44 ihres Mittelabschnittes 38 hinter Rastnasen 46 (Fig.10) einrastet, die an der Innenseite der Lagerflansche 32 ausgebildet sind. Die Lagerringe 30 des Prismagehäuses 12 sind damit von den Lagerschalen 36 an den Lagerflanschen 32 und den Teillagerschalen 42 an der Abdeckplatte 18 eingeschlossen.

Um das Prismagehäuse 12 in einer bestimmten Schwenkstellung relativ zum Lagerrahmen 14 festzuhalten, sind Rastmittel vorgesehen. Diese umfassen bei der dargestellten Ausführungsform Rastvertiefungen 48, die in der Außenumfangsfläche der Lagerringe 30 ausgebildet sind, sowie Rastzungen 50, die einstückig mit den Randflanschen 40 der Abdeckplatte 18 ausgebildet sind und an ihrem freien Ende jeweils eine zum Eingriff in die Vertiefungen 48 bestimmte Rastnase 52 haben. Dadurch, dass die Rastzungen 50 nur an ihrem der jeweiligen Rastnase 52 fernen Ende mit dem jeweiligen Randflansch 40 verbunden sind, können sie federnd ausgelenkt werden, um so ein Verdrehen des Prismagehäuses 12 relativ zu dem Lagerrahmen 14 zu ermöglichen. Gleichzeitig sorgt die Federwirkung der Rastzungen 50 dafür, dass das Prismagehäuse 12 gegen die Lagerschalen 36 des Lagrrahmens 14 gedrückt wird. Die Rastfunktion zwischen den Rastzungen 50 und den Vertiefungen 48 in den Lagerringen 30 ist in Fig.8 näher dargestellt.

Schließlich sind an den Lagerringen 30 noch Endanschläge 54 ausgebildet, welche im Zusammenwirken mit Gegenanschlägen 56 an den Randflanschen 18 den Schwenkweg des Prismagehäuses 12 relativ zum Lagerrahmen 14 begrenzen.

Die aus Lagerrahmen 14, Prismagehäuse 12 und Abdeckplatte 18 bestehende vormontierte Einheit wird auf die Grundplatte 16 aufgesetzt und mit dieser durch Rastmittel verbunden. Die Grundplatte 16 ist gemäß Fig.4 quadratisch ausgebildet und hat Bohrungen 57 zum Durchtritt von Befestigungsschrauben, mit denen die Grundplatte 16 auf einer Unterlage angeschraubt werden kann. Die Grundplatte 16 hat ferner einen stufenförmig abgesetzten Sockel 58, entlang dessen Ränder vier Rastrippen 60 ausgebildet sind. Im Bereich der Rastrippen 60 weist der Sockel 58 Schlitze 62 auf, so dass die Rastrippen 60 mit dem verbleibenden Materialsteg 64 federn können. Die Rastrippen 60 greifen beim Aufsetzen des Lagerrahmens 14 auf die Grundplatte 16 in Aussparungen 66 ein, die an der Innenseite der Lagerflansche 32 ausgebildet sind. Das Zusammenwirken der Rastmittel 60 bis 66 ist in Fig.10 näher dargestellt. Dadurch, dass Rastrippen 60 an allen vier Quadratseiten der Grundplatte 16 vorgesehen sind, kann der Lagerrahmen 14 in zwei um 90° gegeneinander versetzten Stellungen mit der Bodenplatte 16 verbunden werden. Dies kann von Vorteil sein, wenn die Bodenplatte bereits auf einer Unterlage befestigt wurde und die Position des Prismagehäuses 12 für die Vermessung aus einer anderen Richtung nachträglich noch geändert werden soll.

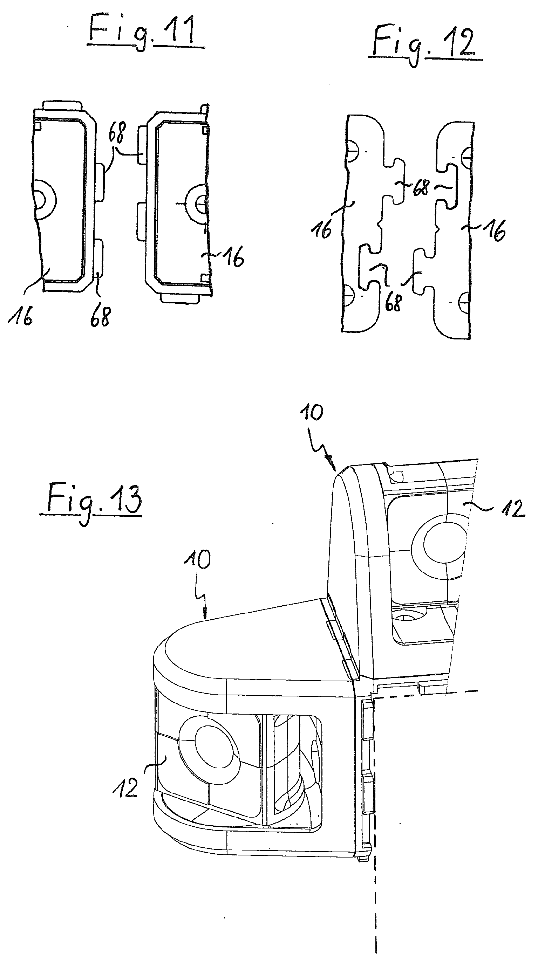

Entlang der Außenränder der Bodenplatte 16 sind Kupplungselemente 68 vorgesehen, mit deren Hilfe zwei nebeneinander angeordnete Vermessungsprismen exakt aufeinander ausgerichtet werden können. Dies ermöglicht es, eine Anordnung aus mehreren Vermessungsprismen zusammenzustellen, die aus verschiedenen Richtungen angepeilt werden können und wobei gleichzeitig ein gemeinsamer Bezugspunkt genau festgelegt werden kann. Die Vermessungsprismen werden dabei in der in der Fig.11 dargestellten Weise aufeinander zu bewegt, bis sie aneinander anstoßen und die Kopplungselemente 68 ineinandergreifen. Fig.12 zeigt dabei eine Ausführungsform, bei welcher die Kopplungselemente ein T-förmiges Profil haben und so ineinander gesteckt werden können, dass die Grundplatten der einander benachbarten Vermessungsprismen fest miteinander zusammenhängen. Eine entsprechende Montage zweier Vermessungsprismen ist auch über Eck, beispielsweise entlang einer Gebäudeeckkannte möglich, so wie dies in Fig.13 dargestellt ist.

Auch diese Anordnung ermöglicht es, die Vermessungsprismen aus unterschiedlichen Richtungen anzupeilen, wobei ein gemeinsamer Bezugspunkt eindeutig bestimmbar ist.

Die vorstehende Beschreibung zeigt, dass das erfindungsgemäße Vermessungsprisma sehr einfach in seinem Aufbau und in der Montage ist sowie ohne weitere Adapter und dergleichen auf einer Fläche eines zu vermessenden Objektes angebracht werden kann. Das Prismagehäuse kann bequem verstellt werden, wobei die kompakte geschlossene Bauweise dafür sorgt, dass die Verschmutzungsanfälligkeit des Vermessungsprismas auch unter rauen Bedingungen vergleichsweise gering ist. Aufgrund der niedrigen Herstellungskosten eignet sich das vorstehend beschriebene Vermessungsprisma auch für den Einsatz in großer Anzahl entlang von Brücken, Tunnels und dergleichen.

## Patentansprüche

1. Vermessungsprisma mit einem ein Prismaelement (24) aufnehmenden Prismagehäuse (12) und einer Halterung, in der das Prismagehäuse (12) um eine parallel zur Lichteintrittsfläche (27) des Prismaelementes (24) gerichtete Achse (22) schwenkbar gelagert ist, wobei die Halterung als Basis mit einer eine Auflagefläche des Vermessungsprismas (10) bildenden Grundplatte (16) und zwei senkrecht zu dieser gerichteten Lagerflanschen (32) ausgebildet ist, zwischen denen das Prismagehäuse (12) schwenkbar gelagert ist, **dadurch gekennzeichnet, dass** die Grundplatte (16) an mindestens einem ihrer Ränder Kopplungsmittel (68) zur lösbaren Verbindung mit der Grundplatte (16) eines gleichartig ausgebildeten Vermessungsprismas (10) hat.

2. Vermessungsprisma nach Anspruch 1, **dadurch gekennzeichnet, dass** das Vermessungsprisma einen Lagerrahmen umfasst, wobei die Lagerflansche (32) Teil des Lagerrahmens (14) sind, der mit der Grundplatte (16) lösbar verbindbar ist.

3. Vermessungsprisma nach Anspruch 2, **dadurch gekennzeichnet, dass** der Lagerrahmen (14) mit der Grundplatte (16) in mindestens zwei verschiedenen Stellungen verbindbar ist, die um eine zur Grundplatte (16) senkrechte Achse gegeneinander versetzt sind.

4. Vermessungsprisma nach Anspruch 3, **dadurch gekennzeichnet, dass** die beiden Stellungen des Lagerrahmens (14) relativ zur Grundplatte (16) um 90° gegeneinander versetzt sind.

5. Vermessungsprisma nach einem der Ansprüche 2 bis 4, **dadurch gekennzeichnet, dass** die Grundplatte (16) mit dem Lagerrahmen (14) durch lösbare Rastmittel (60, 66) verbindbar ist.

6. Vermessungsprisma nach einem der Ansprüche 1 bis 5, **dadurch gekennzeichnet, dass** an den axialen Enden des Prismagehäuses (12) Lagerringe (30) ausgebildet sind, dass an den einander zugekehrten Flächen der Lagerflansche (32) zur Grundplatte (16) hin offene Lagerschalen (36) zur Aufnahme der Lagerringe (30) ausgebildet sind und dass Spannmittel zum Halten der Lagerringe (30) in den Lagerschalen (36) vorgesehen sind.

7. Vermessungsprisma nach Anspruch 6, **dadurch gekennzeichnet, dass** die Spannmittel eine lösbar mit dem Lagerrahmen (14) verbindbare Abdeckplatte (18) umfassen, die in ihrer Verbindungsstellung an dem Prismagehäuse (12) anliegt.

8. Vermessungsprisma nach Anspruch 7, **dadurch gekennzeichnet, dass** an der Abdeckplatte (18) zur Anlage an den Lagerringen (30) bestimmte Teillagerschalen (42) ausgebildet sind.

9. Vermessungsprisma nach Anspruch 7 oder 8 **dadurch gekennzeichnet, dass** an der Abdeckplatte (18) einerseits und dem Prismagehäuse (12) andererseits Federrastmittel ausgebildet sind, die eine Vielzahl von Raststellungen definieren, in denen das Prismagehäuse (12) relativ zur Basis feststellbar ist.

10. Vermessungsprisma nach einem der Ansprüche 6 bis 9, **dadurch gekennzeichnet, dass** der Schwenkwinkel des Prismagehäuses (12) durch an den Lagerringen (30) ausgebildete Endanschläge (54, 56) begrenzt ist.

11. Vermessungsprisma nach einem der Ansprüche 1 bis 10, **dadurch gekennzeichnet, dass** der Schwenkwinkel des Prismagehäuses (12) mindestens 180° beträgt.

12. Vermessungsprisma nach einem der Ansprüche 9 bis 11, aber nur wenn Ansprüche 10 oder 11 vom Anspruch 9 abhängig sind, **dadurch gekennzeichnet, dass** die Federrastmittel mindestens eine an der Abdeckplatte (18) oder dem Prismagehäuse (12) ausgebildete federnde Rastzunge (50) mit einer Rastnase (52) und eine Vielzahl von zur Aufnahme der Rastnase (52) bestimmten Rastvertiefungen (48) umfassen, die an dem Prismagehäuse (12) bzw. der Abdeckplatte (18) entlang dem Schwenkweg des Prismagehäuses (12) ausgebildet sind.

13. Vermessungsprisma nach einem der Ansprüche 7 bis 12, aber nur wenn diese Ansprüche von Ansprüchen 7 bis 9 abhängig sind, **dadurch gekennzeichnet, dass** die Abdeckplatte (18) mit dem Lagerrahmen (14) durch lösbare Rastmittel (44, 46) verbindbar ist.

14. Vermessungsprisma nach einem der Ansprüche 6 bis 13, aber nur wenn diese Ansprüche von Ansprüchen 6 bis 9 abhängig sind, **dadurch gekennzeichnet, dass** das Prismagehäuse (12) zwischen den Lagerringen (30) die Form eines Zylinders hat, der parallel zu der mit der Schwenkachse zusammenfallenden Zylinderachse angeschnitten ist, wobei die Schnittfläche eine Aufnahmeöffnung für das Prismaelement (24) enthält.

15. Vermessungsprisma nach Anspruch 14, **dadurch gekennzeichnet, dass** die Aufnahmeöffnung durch einen Halterahmen (26) abgedeckt ist

## Claims

1. Surveying prism comprising a prism housing (12) accommodating a prism element (24), and a bracket in which the prism housing (12) is mounted pivotably about an axis (22) oriented parallel to the light ingress surface (27) of the prism element (24), wherein the bracket is formed as a base comprising a base plate (16) forming a support surface of the surveying prism (10) and two bearing flanges (32) oriented perpendicularly to said base plate, between which bearing flanges the prism housing (12) is pivotably mounted, **characterized in that** the base plate (16) has coupling means (68) on at least one of its edges for releasably connecting it to the base plate (16) of a surveying prism (10) of similar design.

2. The surveying prism according to claim 1, **characterized in that** the surveying prism comprises a bearing frame, wherein the bearing flanges (32) are part of the bearing frame (14), and the bearing frame is releasably connectable to the base plate (16).

3. The surveying prism according to claim 2, **characterized in that** the bearing frame (14) can be connected to the base plate (16) in at least two different positions which are offset against each other about an axis that is perpendicular to the base plate (16).

4. The surveying prism according to claim 3, **characterized in that** the two positions of the bearing frame (14) are offset against each other by 90 degrees relative to the base plate (16).

5. The surveying prism according to one of claims 2 to 4, **characterized in that** the base plate (16) can be connected to the bearing frame (14) by means of releasable catch means (60, 66).

6. The surveying prism according to one of claims 1 to 5, **characterized in that** on the axial ends of the prism housing (12) bearing rings (30) are formed, **in that** bearing shells (36) intended for receiving the bearing rings (30) and open towards the base plate (16) are formed on the surfaces of the bearing flanges (32) that face each other, and **in that** tension means for retaining the bearing rings (30) in the bearing shells (36) are provided.

7. The surveying prism according to claim 6, **characterized in that** the tension means comprise a cover plate (18) that can be releasably connected to the bearing frame (14), which cover plate abuts the prism housing (12) at its connected position.

8. The surveying prism according to claim 7 **characterized in that** partial bearing shells (42) are formed on the cover plate (18) for abutment against the bearing rings (30).

9. The surveying prism according to claim 7 or 8, **characterized in that** both on the cover plate (18) and on the prism housing (12) spring catch means are provided, which spring catch means define a plurality of catch positions in which the prism housing (12) can be fixed relative to the base.

10. The surveying prism according to one of claims 6 to 9, **characterized in that** the pivot angle of the prism housing (12) is delimited by end stops (54, 56) formed on the support rings (30).

11. The surveying prism according to one of claims 1 to 10, **characterized in that** the pivot angle of the prism housing (12) measures at least 180 degrees.

12. The surveying prism according to one of claims 9 to 11, provided claim 10 or claim 11 is dependent on claim 9, **characterized in that** the spring latch means comprise at least one elastic catch tongue (50) having a catch nose (52), which catch tongue is formed on the cover plate (18) or the prism housing (12), and a plurality of catch recesses (48) for receiving the catch nose (52), which catch recesses are formed on the prism housing (12) and/or the cover plate (18), respectively, along the pivoting range of the prism housing (12).

13. The surveying prism according to one of claims 7 to 12, provided these claims are dependent on claims 7 to 9, **characterized in that** the cover plate (18) can be connected to the bearing frame (14) by releasable catch means (44, 46).

14. The surveying prism according to one of claims 6 to 13, provided these claims are dependent on claims 6 to 9, **characterized in that** between the bearing rings (30) the prism housing (12) has the form of a cylinder which is partially cut parallel to the cylinder axis which coincides with the pivot axis, wherein the cut surface contains a receiving opening for the prism element (24).

15. The surveying prism according to claim 14, **characterized in that** the receiving opening is covered by a retaining frame (26).

## Revendications

1. Prisme de mesure comprenant un boîtier de prisme (12) logeant un élément de prisme (24) et un élément de retenue dans lequel le boîtier de prisme (12) est monté de manière à pouvoir pivoter autour d'un axe (22) orienté parallèlement à la surface d'entrée de lumière (27) de l'élément de prisme (24), l'élément de retenue étant réalisé sous la forme d'une base comprenant une plaque de fond (16) formant une surface d'appui du prisme de mesure (10) et deux brides de support (32) orientées perpendiculairement à ladite plaque, entre lesquelles le boîtier de prisme (12) est monté pivotant, **caractérisé en ce que** la plaque de fond (16) présente sur au moins un de ses bords des moyens d'accouplement (68) permettant une liaison amovible à la plaque de fond (16) d'un prisme de mesure (10) de structure similaire.

2. Prisme de mesure selon la revendication 1, **caractérisé en ce que** le prisme de mesure comprend un cadre de support, les brides de support (32) faisant partie du cadre de support (14) qui peut être relié de façon détachable à la plaque de fond (16).

3. Prisme de mesure selon la revendication 2, **caractérisé en ce que** le cadre de support (14) peut être relié à la plaque de fond (16) dans au moins deux positions différentes, qui sont décalées l'une de l'autre autour d'un axe perpendiculaire à la plaque de fond (16).

4. Prisme de mesure selon la revendication 3, **caractérisé en ce que** les deux positions du cadre de support (14) sont décalées l'une de l'autre de 90° par rapport à la plaque de fond (16).

5. Prisme de mesure selon l'une quelconque des revendications 2 à 4, **caractérisé en ce que** la plaque de fond (16) peut être reliée au cadre de support (14) par des moyens d'encliquetage (60, 66) détachables.

6. Prisme de mesure selon l'une quelconque des revendications 1 à 5, **caractérisé en ce que** des bagues de support (30) sont formées aux extrémités axiales du boîtier de prisme (12), **en ce que** des coquilles de support (36) ouvertes en direction de la plaque de fond (16) et destinées à recevoir les bagues de support (30) sont formées sur les surfaces tournées les unes vers les autres des brides de support (32), et **en ce que** des moyens de serrage sont destinés à retenir les bagues de support (30) dans les coquilles de support (36).

7. Prisme de mesure selon la revendication 6, **caractérisé en ce que** les moyens de serrage comprennent une plaque de recouvrement (18) qui peut être reliée de manière détachable au cadre de support (14) et qui, dans sa position de liaison, repose sur le boîtier de prisme (12).

8. Prisme de mesure selon la revendication 7, **caractérisé en ce que** des parties (42) de coquilles de support destinées à être en appui sur les bagues de support (30) sont formées sur la plaque de recouvrement (18).

9. Prisme de mesure selon la revendication 7 ou 8, **caractérisé en ce que** des moyens d'encliquetage à ressort, qui définissent une pluralité de positions d'encliquetage dans lesquelles le boîtier de prisme (12) peut être bloqué par rapport à la base, sont formés sur la plaque de recouvrement (18) d'une part et sur le boîtier de prisme (12) d'autre part.

10. Prisme de mesure selon l'une quelconque des revendications 6 à 9, **caractérisé en ce que** l'angle de pivotement du boîtier de prisme (12) est limité par des butées de fin de course (54, 56) formées sur les bagues de support (30).

11. Prisme de mesure selon l'une quelconque des revendications 1 à 10, **caractérisé en ce que** l'angle de pivotement du boîtier de prisme (12) atteint au moins 180°.

12. Prisme de mesure selon l'une quelconque des revendications 9 à 11, mais uniquement lorsque la revendication 10 ou 11 dépend de la revendication 9, **caractérisé en ce que** les moyens d'encliquetage à ressort comprennent au moins une languette d'encliquetage (50) à ressort formée sur la plaque de recouvrement (18) ou le boîtier de prisme (12) et pourvue d'un ergot d'encliquetage (52) et une pluralité de creux d'encliquetage (48) qui sont conçus pour recevoir l'ergot d'encliquetage (52) et qui sont formés sur le boîtier de prisme (12) ou la plaque de recouvrement (18) le long du trajet de pivotement du boîtier de prisme (12).

13. Prisme de mesure selon l'une quelconque des revendications 7 à 12, mais uniquement lorsque ces revendications dépendent des revendications 7 à 9, **caractérisé en ce que** la plaque de recouvrement (18) peut être reliée au cadre de support (14) par des moyens d'encliquetage (44, 46) détachables.

14. Prisme de mesure selon l'une quelconque des revendications 6 à 13, mais uniquement lorsque ces revendications dépendent des revendications 6 à 9, **caractérisé en ce que** le boîtier de prisme (12) entre les bagues de support (30) présente la forme d'un cylindre qui est entaillé parallèlement à l'axe de cylindre coïncidant avec l'axe de pivotement, la surface d'entaille contenant une ouverture de réception pour l'élément de prisme (24).

15. Prisme de mesure selon la revendication 14, **caractérisé en ce que** l'ouverture de réception est recouverte par un cadre de retenue (26).
